# EUROPEAN PATENT APPLICATION

(11) **EP 4 338 875 A1**
(43) Date of publication of application: **20.03.2024**
(21) Application number: 23197174.8
(22) Date of filing: 13.09.2023
(51) Int. Cl.: B23C 5/10, B23C 5/22

(54) **CUTTING INSERT**

(30) Priority: 13.09.2022 KR 20220115116
(71) Applicant: YG-1 Co., Ltd., Incheon 21984 (KR)
(72) Inventor: HAM, Tae Sun, 27325 Chungcheongbuk-do (KR); ANTON, Babushkin, 27325 Chungcheongbuk-do (KR); PARK, Geun Woo, 27325 Chungcheongbuk-do (KR)
(74) Representative: Meissner Bolte Partnerschaft mbB

(57) **Abstract**

A cutting insert includes a top surface, a bottom surface, a pair of sub-side surfaces and a pair of main side surfaces configured to connect ends of the top surface and the bottom surface in a width direction and a longitudinal direction to each other respectively, a plurality of corner side surfaces configured to connect the pair of sub-side surfaces to the pair of main side surfaces, a through-hole configured to pass through central portions of the top surface and the bottom surface, and a cutting part disposed on at least a portion of portions at which the top surface and the bottom surface intersect the pair of sub-side surfaces, the pair of main side surfaces, and the plurality of corner side surfaces. The top surface may include a mounting surface in which the through-hole is defined and a pair of protrusions convexly protruding upward from the mounting surface.

## Description

### CROSS-REFERENCE TO RELATED APPLICATIONS

This application claims the priority of Korean Patent Application No. 10-2022-0115116, filed on September 13, 2022, in the Korean Intellectual Property Office, the disclosure of which is incorporated herein by reference.

### BACKGROUND OF THE INVENTION

### Field of the Invention

The present invention relates to a cutting insert, and more particularly, to a cutting insert that is replaceably mounted in an insert pocket provided in an end of a cutting tool to cut a workpiece.

### Description of the Related Art

A cutting tool is a tool that is coupled to a general-purpose or dedicated machine tool for cutting processing and is used to cut or shear a metal by rotation thereof. A representative example of the cutting tool is a cutting bite that is widely used in machine tools such as lathes and milling machine.

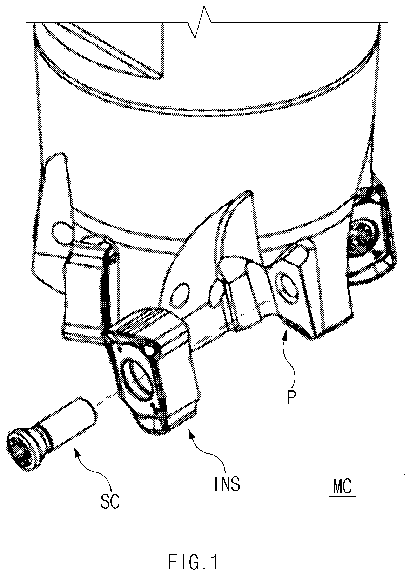

FIG. 1 is a view illustrating a configuration in which a cutting insert INS is coupled to a cutting tool MC. In general, a cutting-edge replaceable rotary cutting tool, in which the cutting insert INS made of a cemented carbide material with a cutting edge at one side is freely attached and detached from an insert pocket P provided at a front end of a tool body by using a clamp screw SC, has been commercialized and used as the cutting tool MC. Such a cutting-edge replaceable rotary cutting tool may be equipped with a plurality of cutting inserts INS to perform cutting processing on workpieces such as steel and cast iron with high efficiency under high-feed cutting conditions.

When the cutting insert INS is coupled to the insert pocket P of the cutting tool MC, clamping force by the clamp screw SC acts on the cutting tool MC and the cutting insert INS. However, in order to maintain stable coupling of the cutting insert INS to the cutting tool MC, an important factor is how well the insert pocket P and the cutting insert INS have close contact with each other.

### SUMMARY OF THE INVENTION

An aspect of the present invention provides a cutting insert capable of performing stable cutting processing by improving coupling force between an insert pocket of a cutting tool and the cutting insert.

According to another aspect of the present invention, there is provided a cutting insert including: a top surface; a bottom surface; a pair of sub-side surfaces configured to connect ends of the top surface and the bottom surface in a width direction to each other; a pair of main side surfaces configured to connect ends of the top surface and the bottom surface in a longitudinal direction to each other; a plurality of corner side surfaces configured to connect the pair of sub-side surfaces to the pair of main side surfaces; a through-hole configured to pass through central portions of the top surface and the bottom surface; and a cutting part disposed on at least a portion of portions at which the top surface and the bottom surface intersect the pair of sub-side surfaces, the pair of main side surfaces, and the plurality of corner side surfaces, wherein the top surface includes a mounting surface in which the through-hole is defined and a pair of protrusions convexly protruding upward from the mounting surface.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a view illustrating a configuration in which a cutting insert is coupled to a cutting tool;
FIG. 2 is a perspective view illustrating a configuration of an exemplary cutting insert;
FIG. 3 is a perspective view illustrating a configuration of a cutting insert according to a first embodiment of the present invention;
FIG. 4 is a perspective view illustrating the cutting insert of FIG. 3 when viewed at a different angle;
FIG. 5 is a plan view of the cutting insert according to the first embodiment of the present invention;
FIG. 6 is a cross-sectional view of the cutting insert, taken along line B-B' of FIG. 5, according to the first embodiment of the present invention;
FIG. 7 is a cross-sectional view of the cutting insert, taken along line C-C' of FIG. 5, according to the first embodiment of the present invention;
FIG. 8 is a perspective view illustrating a configuration of a cutting insert according to a second embodiment of the present invention;
FIG. 9 is a plan view of the cutting insert according to the second embodiment of the present invention;
FIG. 10 is a cross-sectional view of the cutting insert, taken along line E-E' of FIG. 9, according to the second embodiment of the present invention;
FIG. 11 is a cross-sectional view of the cutting insert, taken along line F-F' of FIG. 9, according to the second embodiment of the present invention;
FIG. 12 is a perspective view illustrating a configuration of a cutting insert according to a third embodiment of the present invention;
FIG. 13 is a plan view of the cutting insert according to the third embodiment of the present invention;
FIG. 14 is a perspective view illustrating a configuration of a cutting insert according to a fourth embodiment of the present invention;
FIG. 15 is a plan view of the cutting insert according to the fourth embodiment of the present invention;
FIG. 16 is a perspective view illustrating a configuration of a cutting insert according to a fifth embodiment of the present invention;
FIG. 17 is a plan view of the cutting insert according to the fifth embodiment of the present invention;
FIG. 18 is a perspective view illustrating a configuration of a cutting insert according to a sixth embodiment of the present invention; and
FIG. 19 is a plan view of the cutting insert according to the sixth embodiment of the present invention.

### DETAILED DESCRIPTION OF THE PREFERRED EMBODIMENT

Hereinafter, embodiments of the present invention will be described in detail with reference to the accompanying drawings. In adding of reference numerals to components of each drawing, it should be noted that the same components have the same numerals as much as possible even if the components are displayed on different drawings. In the following description of the present invention, a detailed description of known functions and configurations incorporated herein will be omitted to avoid making the subject matter of the present invention unclear.

Also, in the description of the embodiments of the present invention, the terms such as first, second, A, B, (a) and (b) may be used. These terms are only used to distinguish the component from other components, and the essence, sequence, or order of the corresponding component is not limited by the term. It should be understood that when an element is described as being "connected," "coupled", or "joined" to another element, the former may be directly connected or jointed to the latter or may be "connected", coupled" or "joined" to the latter with a third component interposed therebetween.

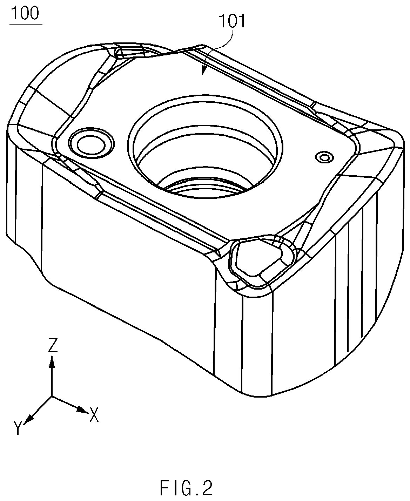

FIG. 2 is a perspective view illustrating a configuration of an exemplary cutting insert 100.

It is considered that a cutting insert such as the exemplary cutting insert 100 of FIG. 2. When a top surface 101 is provided to form the coplanar as a whole, as in the exemplary cutting insert 100 of FIG. 2, a coupling surface of the insert pocket has to also be provided to have the same plane.

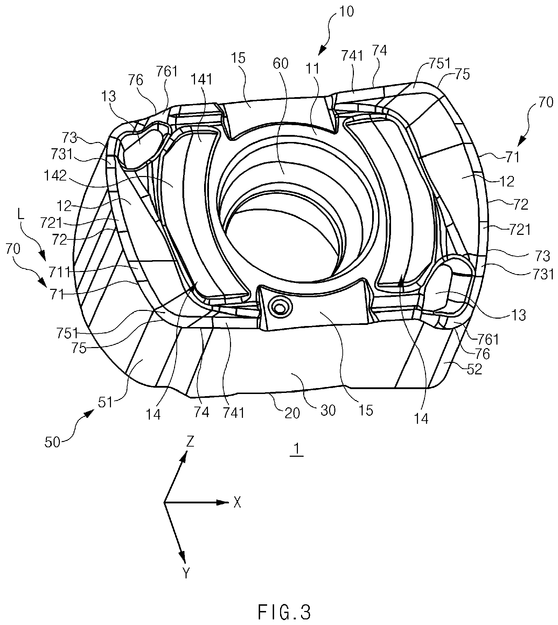

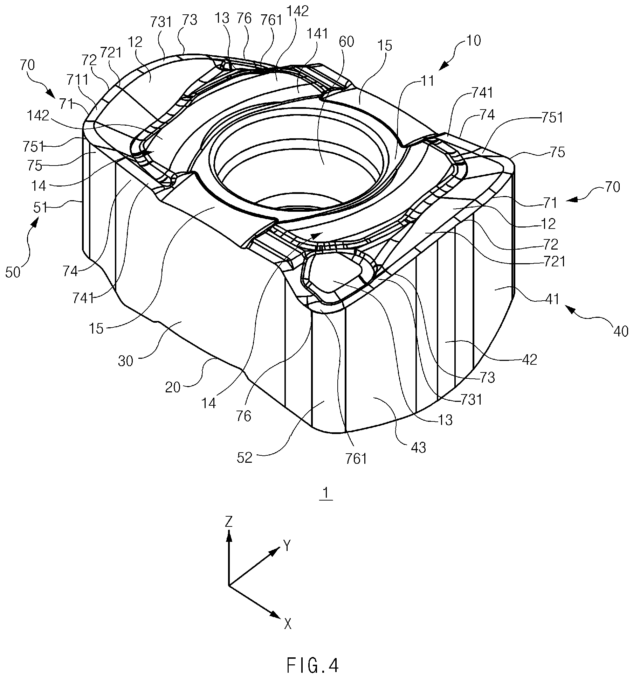

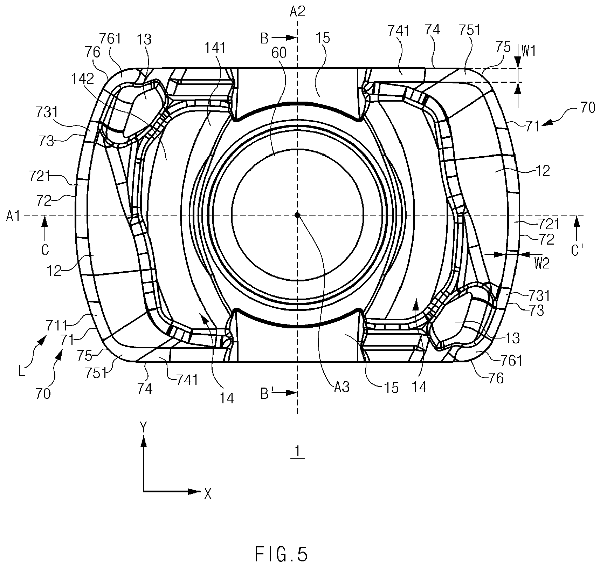

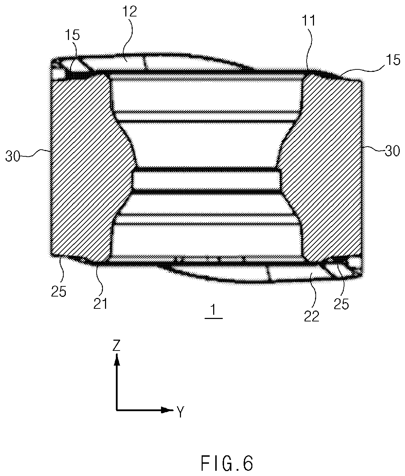

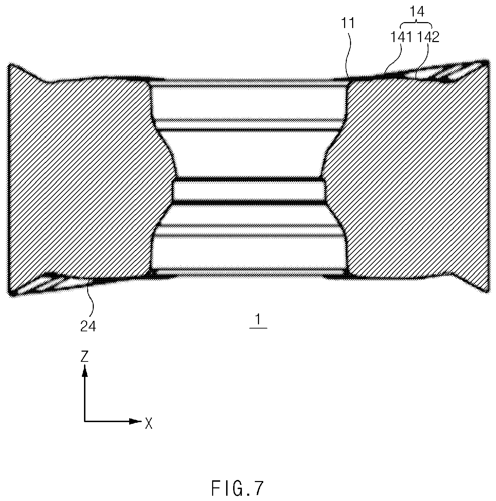

FIG. 3 is a perspective view illustrating a configuration of a cutting insert according to a first embodiment of the present invention. FIG. 4 is a perspective view illustrating the cutting insert of FIG. 3 when viewed at a different angle. FIG. 5 is a plan view of the cutting insert according to the first embodiment of the present invention. FIG. 6 is a cross-sectional view of the cutting insert, taken along line B-B' of FIG. 5, according to the first embodiment of the present invention. FIG. 7 is a cross-sectional view of the cutting insert, taken along line C-C' of FIG. 5, according to the first embodiment of the present invention.

Referring to the drawings, a cutting insert 1 according to a first embodiment of the present invention includes a top surface 10, a bottom surface 20, a pair of sub-side surfaces 30, a pair of main side surfaces 40, a plurality of corner side surfaces 50, a through-hole 60, and a cutting part 70.

As illustrated in FIGS. 3 to 7, the cutting insert 1 may be provided in a hexahedral shape as a whole and be defined by the top surface 10, the bottom surface 20, and four side surfaces 30 and 40 connecting the top surface 10 to the bottom surface 20. The top surface 10 may be viewed entirely from the top, and the bottom surface 20 may be viewed entirely from the bottom. That is, the top surface 10 and the bottom surface 20 may face each other in opposite directions as a whole. The bottom surface 20 may be disposed to be spaced downward from the top surface 10.

The upper and bottom surfaces 10 and 20 of the cutting insert 1 may include mounting surfaces 11 and 21 provided adjacent to the through-hole 60 in a shape surrounding the through-hole 60. The mounting surfaces 11 and 21 may be provided as curved surfaces, but may also be disposed on a plane orthogonal to a vertical direction Z or provided as irregularly shaped surfaces. The mounting surface 11 of the top surface 10 and the mounting surface 21 of the bottom surface 20 may be provided as planes parallel to each other.

The top surface 10 may include an inclined surface 12. The inclined surface 12 may be provided to be inclined toward an entire section of a first corner cutting edge 75, a first cutting edge 71, and a second cutting edge 72 of the cutting part 70, which will be described later and are provided higher than the mounting surface 11, a partial section of a third cutting edge, which is adjacent to the second cutting edge 72, and a partial section of a fourth cutting edge 74, which is adjacent to the first corner cutting edge 75.

The inclined surface 22 provided on the bottom surface 20 may be provided in a shape that is rotationally symmetrical to the inclined surface 12 of the top surface 10 at an angle of about 180 degrees. That is, each of the top surface 10 and the bottom surface 20, which include the mounting surfaces 11 and 21 and inclined surfaces 12 and 22, respectively, may be provided in a shape that is rotationally symmetrical with respect to a central axis A2 in a width direction Y and a central axis A1 in a longitudinal direction X at an angle of 180 degrees so that the top surface 10 is seated on the insert pocket of the cutting tool, or conversely, the bottom surface 20 is turned over and seated on the insert pocket.

The through-hole 60 may be provided to pass through a center of each of the mounting surfaces 11 and 21 of the upper and bottom surfaces 10 and 20 to perform a function of a clamping hole to which the clamp screw is coupled when the cutting insert 1 is coupled to the insert pocket of the cutting tool.

In addition, the pair of sub-side surfaces 30 may include a front surface and a rear surface, which connect ends of the top surface 10 and the bottom surface 20 in the width direction to each other and face each other in opposite directions. The pair of main side surfaces 50 may include a left side surface and a right side surface, which connect ends of the top surface 10 and the bottom surface 20 in the longitudinal direction X to each other and face each other in opposite directions.

The pair of sub-side surfaces 30 and the pair of main side surfaces 40 may be connected to each other by the plurality of corner side surfaces 50, each of which is provided in a curved shape. The pair of sub-side surfaces 30, the pair of main side surfaces 40, and the plurality of corner side surfaces 50 may be orthogonal to the mounting surfaces 11 and 21 of the top surface 10 and the bottom surface 20.

The cutting part 70 capable of cutting a workpiece may be provided on at least a portion of portions at which the top surface 10, the bottom surface 20, the pair of sub-side surfaces 30, the pair of main side surfaces 40, and the plurality of corner side surfaces 50 intersect each other.

The cutting part 70 may include the first corner cutting edge 75 extending along the first corner side surface 51 that is one of the plurality of corner side surfaces 50 in the plan view with the top surface 10 as a plane. The cutting part 70 may include the first cutting edge 71 extending in a convex curved shape from one end of the first corner cutting edge 75 along the pair of main side surfaces 40. The first cutting edge 71 may have a curvature radius of about 4.5 mm to about 6.5 mm. The cutting part 70 may include the second cutting edge 72 extending in a straight line from one end of the first cutting edge 71 along the pair of main side surfaces 40. The cutting part 70 may include a third cutting edge 73 extending in a convex curved shape and having the same curvature radius as the first cutting edge 71 from one end of the second cutting edge 72 along the pair of main side surfaces 40. The cutting part 70 may include a second corner cutting edge 76 extending from one end of the third cutting edge 73 along the second corner side surface 52, which is provided at an opposite side of the first corner side surface 51 in the width direction Y, of the plurality of corner side surfaces 50.

The pair of main side surfaces 40 on which the first cutting edge 71, the second cutting edge 72, and the third cutting edge 73 are provided may include a first side surface 41 provided in a convex curved surface along the first cutting edge 71. The main side surface 40 may be provided in a flat plane along the second cutting edge 72 and include a second side surface 42 provided in a vertical direction with respect to the pair of sub-side surfaces 30. The main side surface 40 may include a third side surface 43 provided in a convex curved surface and having the same curvature radius as the first side surface 41 along the third cutting edge 73.

An entire section of the first corner cutting edge 75, the first cutting edge 71, and the second cutting edge 72, and a partial section adjacent to the second cutting edge 72 of the third cutting edge 73 may be provided at positions higher than the mounting surface 11 of the top surface 10, and the other section of the third cutting edge 73 adjacent to the second corner cutting edge 76 and an entire section of the second corner cutting edge 76 may be provided at positions lower than the mounting surface 11 of the top surface 10.

When the cutting insert 1 is viewed with the pair of main side surfaces 40 as a side surface, the first cutting edge 71 may be provided to be inclined upward or parallel with respect to the mounting surface 11 of the top surface 10 from one end of the first corner cutting edge 75. The second cutting edge 72 may be provided to be inclined in a direction from one end of the first cutting edge 71 toward the mounting surface 11. The third cutting edge 73 may be provided to be inclined downward with respect to the mounting surface 11 from one end of the second cutting edge 72 to the second corner cutting edge 76 provided lower than the mounting surface 11 so that a partial section of the third cutting edge 73 is provided at a position higher that the mounting surface 11, and the other section of the cutting edge 73 is disposed at a position lower than the mounting surface 11.

Here, as illustrated in the drawings, each of land surfaces 711, 721, 731, 751, and 761 of the first cutting edge 71, the second cutting edge 72, the third cutting edge 73, the first corner cutting edge 75, and the second corner cutting edge 76 may be provided to be inclined in an opposite direction at an inclination angle different from that of the inclined surface 12 of the top surface 10. However, the present invention is not necessarily limited to this structure, and each of the land surfaces 711, 721, 731, 751, and 761 may be provided in the same direction at an inclination angle different from that of the inclined surface 12 of the top surface 10.

The cutting part 70 may be configured in a state in which the first cutting edge 71 extending from one end of the first corner cutting edge 75 to have the convex curved shape, the second cutting edge 72 extending to have the straight line shape, the third cutting edge 73 extending to have the convex curved shape, and the second corner cutting edge 76 are sequentially arranged to be connected to each other as one cutting edge. Here, the first cutting edge 71 provided in the curved shape may serve as a main cutting edge, the second cutting edge 72 provided in the straight line may serve as both the main cutting edge and the sub-cutting edge, and the remaining cutting edges may serve as sub-cutting edges.

As described above, the first cutting edge 71, the second cutting edge 72, and the third cutting edge 73, which constitute the cutting part 70, may be smoothly connected to each other to prevent an end of each cutting edge from being consumed preferentially, and also, the shape of the cutting part 70 may be maintained for a long time to maintain cutting performance for a long time.

In addition, a land portion L of the cutting part 70 may be provided to be inclined in the opposite direction or in the same direction at the inclination angle different from that of the inclined surface 12 of the top surface 10, the second cutting edge 72 and the third cutting edge 73 may be provided to be inclined downward from the first cutting edge 71, which serves as the main cutting edge of the cutting portion 70, toward the second corner cutting edge 76, and a cutting chip generated from the first cutting edge 71 may be discharged along the inclined surface 12 through the second cutting edge 72 and the third cutting edge 73 toward the second corner cutting edge 76.

Here, in order to facilitate the discharge of the cutting chip, a portion of the top surface 10 adjacent to the second corner side 52 may be a chip recess 13 that is concave in the vertical direction Z.

The chip recess 13 may be defined by being surrounded by the mounting surface 11, the third cutting edge 73, and the second corner cutting edge 76 when viewed in the vertical direction Z. The cutting chip discharged toward the second corner cutting edge 76 may be guided by the chip recess 13 so as to be easily escaped to the outside of the cutting insert 1.

The cutting part 70 may include the fourth cutting edge 74 extending in the straight line from the first corner cutting edge 75 along the pair of sub-side surfaces 30. When the fourth cutting edge 74 is viewed in the vertical direction Z, a width W1 of the land surface 741 provided to be inclined at an inclination angle different from that of the inclined surface 12 of the top surface 10 may be greater than a width W2 of each of the land surfaces 711, 721, and 731 of the cutting edge 71, the second cutting edge 72, and the third cutting edge 73.

A portion of the section of the fourth cutting edge 74, which is adjacent to the first corner cutting edge 75, may be provided at a position higher than the mounting surface 11 of the top surface 10 and other portion may be provided at a position lower than the mounting surface 11.

The fourth cutting edge 74 may be provided to be inclined in a direction from the first corner cutting edge 75 toward the top surface 10. That is, the fourth cutting edge 74 may be provided to be inclined at a predetermined angle toward the top surface 10 in a direction that is away from the first corner cutting edge 75. Here, the predetermined angle may be about 7 degrees to about 11 degrees, and may be about 9 degrees.

Due to this configuration, the fourth cutting edge 74 may also function as a support part for supporting the cutting insert 1. The fourth cutting edge 74, which is inclined at a predetermined angle with respect to cutting component force generated when the cutting insert 1 mounted on the cutting tool cuts the workpiece, may serve as a support member for supporting the cutting insert 1.

Thus, the cutting insert 1 may be firmly supported by the cutting tool to strengthen the rigidity of the cutting insert 1. As a result, a high-feed rate may be applicable to improve productivity. In addition, since the cutting insert 1 is firmly supported by the cutting tool, vibration of the cutting insert 1 may be prevented during the cutting, and good surface roughness may be obtained on a processed surface of the workpiece, thereby improving quality of the cutting processing.

In addition, the cutting part 70 constituted by the first corner cutting edge 75, the second corner cutting edge 76, the first cutting edge 71, the second cutting edge 72, the third cutting edge 73, and the fourth cutting edge 74 may be provided on the top surface 10 and the bottom surface 20, each of which has a shape rotationally symmetrical with respect to a central axis A2 in the width direction Y of the cutting insert 1, a central axis A1 in the longitudinal direction X of the cutting insert 1, and a central axis A3 of the through-hole 60 at an angle of about 180 degrees.

As described above, the cutting part 70 may be provided in a shape that is rotationally symmetrical with respect to each of the central axes A1, A2, and A3 of the cutting insert 1 at an angle of about 180 degrees, and thus, the cutting insert 1 may be maintained in the same shape regardless of the directions of the cutting insert 1 disposed in the insert pocket of the cutting tool.

The top surface 10 may include a pair of protrusions 14 that protrude convexly upward from the mounting surface 11. The pair of protrusions 14 may be provided at both sides of the through-hole 60 with respect to the longitudinal direction X. The pair of protrusions 14 may have shapes that are symmetrical to each other with the through-hole 60 as a center.

Each of the protrusion 14 may have a convex shape toward the outside based on the longitudinal direction X when viewed in the vertical direction Z. The protrusion 14 may be provided in a curved shape when viewed in the vertical direction Z. When viewed in the vertical direction Z, a curvature radius of the protrusion 14 may be greater than that of the through-hole 60. Curvature radii of an inner boundary and an outer boundary of the protrusion 14 may be provided differently based on the longitudinal direction X. A width of the protrusion 14 in the longitudinal direction X may be maintained uniformly in the width direction Y, but may decrease at an end thereof in the width direction Y.

The protrusion 14 may include an inner convex surface 141 inclined upward toward the outside with respect to the longitudinal direction X. The protrusion 14 may be disposed on the outside of the inner convex surface 141 based on the longitudinal direction X and may include an outer convex surface 142 inclined upward toward the inside. The inner convex surface 141 and the outer convex surface 142 are connected to form a protrusion 14 that is generally convex upward. In a portion of the inner convex surface 141 adjacent to the through-hole 60, a slope in the vertical direction Z with respect to the longitudinal direction X may be steeper than in other portions of the inner convex surface 141.

A protruding height of each of the pair of protrusions 14 may be less than a height of the highest portion of the cutting part 70.

Since the cutting insert 1 according to the first embodiment of the present invention has the upwardly convex protrusion 14, a contact surface of the insert pocket of the cutting tool to which the cutting insert 1 is to be coupled may have to have a concave shape corresponding to the shape of the protrusion 14. Thus, the contact area between the cutting insert 1 and the insert pocket may increase between the cutting insert 1 according to the first embodiment and the corresponding insert pocket when compared to the case in which the planes meet each other. In addition, since a plane corresponding to the mounting surface 11 is also provided in the insert pocket, the protrusion 14 may serve as a hook protrusion to prevent the cutting insert from being separated from the insert pocket. The cutting insert 1 according to the first embodiment of the present invention may increase in contact area with the insert pocket to improve the support force of the insert pocket for the cutting insert 1, thereby enabling stable cutting processing.

The protrusion 14 is provided, and thus, when compared to the case in which the top surface has only the planar mounting surface, bending stress applied to the cutting insert 1 may be more withstood by a pressure in an axial direction during the clamping, and thus, a lifespan of the cutting insert 1 may increase.

If the protrusion 14 is not provided, force applied to the cutting part when the cutting insert mounted on the cutting tool cuts the workpiece may be offset by force generated by supporting the main side surface disposed at the opposite side of the corresponding cutting part through the cutting tool in the longitudinal direction X. In the cutting insert 1 on which the protrusion 14 is provided, the force applied to the cutting part 70 may be offset by the force applied to the protrusion 14 supported by the cutting tool in the vertical direction Z as well as the longitudinal direction X through the contact with the insert pocket in addition to the force applied to the main side surface 40 disposed at the opposite side of the corresponding cutting part 70.

Each of the protrusions 14 and 24 may be provided on the top surface 10 and the bottom surface 20 in a shape that is rotationally symmetrical at an angle of about 180 degrees with respect to the central axis A2 in the width direction Y, the central axis A1 in the longitudinal direction X of the cutting insert 1 and the central axis A3 of the through-hole 60. Each of the protrusions 14 and 24 may be provided in a shape that is rotationally symmetrical with respect to each of the central axes A1, A2, and A3 of the cutting insert 1 at an angle of about 180 degrees, and thus, the protrusions 14 and 24 may have the same effect in increase of the coupling force regardless of the directions of the cutting insert 1 disposed in the insert pocket of the cutting tool.

The top surface 10 may include a pair of concave portions 15 disposed lower than the mounting surface 11. When viewed in the vertical direction Z, the pair of concave portions 15 may be disposed between the pair of protrusions 14 based on the longitudinal direction X. The pair of concave portions 15 may be provided between the mounting surface 11 and the pair of sub-side surfaces 30. The pair of concave portions 14 may be disposed at both sides of the through-hole 60 in the width direction Y. The pair of concave portions 14 may have a shape that is symmetrical about the through-hole 60.

The concave portion 15 may have a shape inclined downward with respect to the outside based on the width direction Y. The concave portion 15 may have a shape that is concave downward.

The inner boundary of the concave portion 15 based on the width direction Y may have a convex shape outward. The inner boundary of the concave portion 15 based on the width direction Y may have the same curvature radius as the through-hole 60. The inner boundary of the concave portion may be orthogonal to the longitudinal direction X based on the longitudinal direction X. A step between the concave portion 15 and the mounting surface 11 may be generated.

The cutting insert 1 according to the first embodiment of the present invention may have the concave portion 15 that improves a discharge flow of the cutting chip and may smoothly guide the flow of the cutting chip generated during the cutting processing to improve performance discharge performance of the cutting chip. Since the concave portion 15 is provided, a length of a path, through which the cutting chip moves from the cutting part 70 to be in contact with the mounting surface 11, may be reduced, and thus, the cutting chip may be easily discharged, and the lifespan of the cutting insert 1 may increase.

Each of the concave portions 15 and 25 may be provided on the top surface 10 and the bottom surface 20 in a shape that is rotationally symmetrical at an angle of about 180 degrees with respect to the central axis A2 in the width direction Y, the central axis A1 in the longitudinal direction X of the cutting insert 1 and the central axis A3 of the through-hole 60. Each of the concave portions 15 and 25 may be provided in a shape that is rotationally symmetrical with respect to each of the central axes A1, A2, and A3 of the cutting insert 1 at an angle of about 180 degrees, and thus, the cutting insert 1 may have the same effect in chip discharge improvement regardless of the directions of the cutting insert 1 disposed in the insert pocket of the cutting tool.

When the cutting insert 1 is viewed as illustrated in FIG. 6, both outer ends of the cutting insert 1 in the width direction Y may be disposed lower than both inner ends of the cutting insert 1 in the vertical direction Z. A profile connecting both the outer ends to both the inner ends may include at least one of a upwardly convex curve or a concave curve.

### Second embodiment

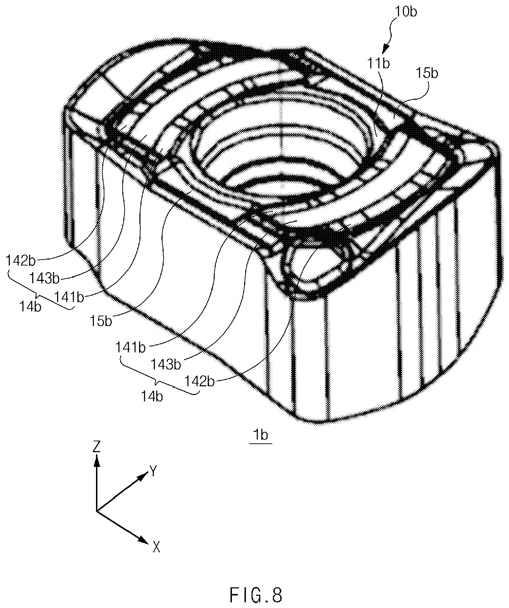

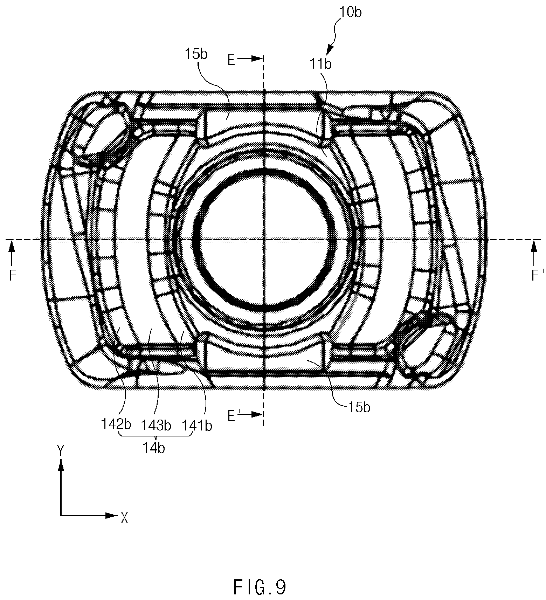

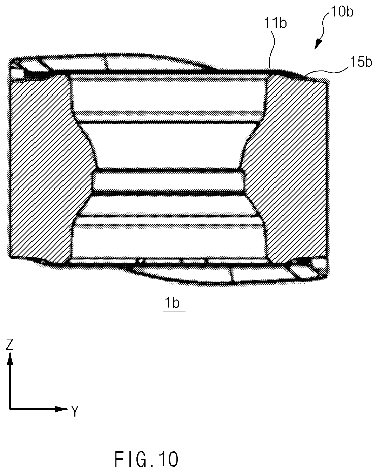

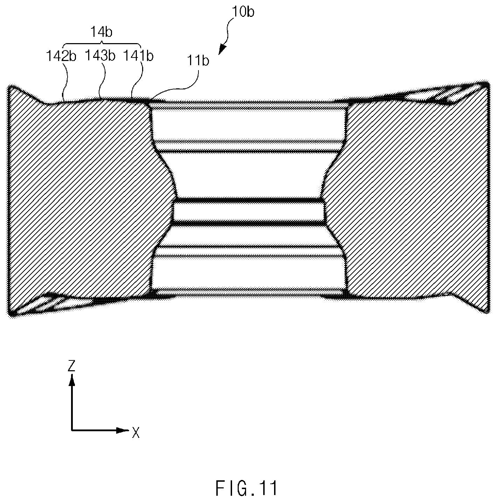

FIG. 8 is a perspective view illustrating a configuration of a cutting insert 1b according to a second embodiment of the present invention. FIG. 9 is a plan view of the cutting insert 1b according to the second embodiment of the present invention. FIG. 10 is a cross-sectional view of the cutting insert 1b, taken along line E-E' of FIG. 9, according to the second embodiment of the present invention. FIG. 11 is a cross-sectional view of the cutting insert 1b, taken along line F-F' of FIG. 9, according to the second embodiment of the present invention.

The cutting insert 1b according to the second embodiment of the present invention differs from the cutting insert 1 according to the first embodiment only in shape of a protrusion 14b and shape of a concave portion 15b, and thus, the difference in only the portions with will be further described, and the descriptions of the cutting insert 1 according to the first embodiment may be applied to the remaining portions.

The protrusion 14b of a top surface 10b of the cutting insert 1b according to the second embodiment of the present invention may include an inner convex surface 141b inclined upward toward the outside with respect to a longitudinal direction X. The protrusion 14b may be disposed outside the inner convex surface 141b in the longitudinal direction X and may include an outer convex surface 142b inclined upward toward the inside. The protrusion 14b may include a flat surface 143b disposed between the inner convex surface 141b and the outer convex surface 142b. The flat surface 143b may be inclined to form an angle of about 0 degree to about 3 degrees with respect to a plane orthogonal to a vertical direction Z.

### Third embodiment

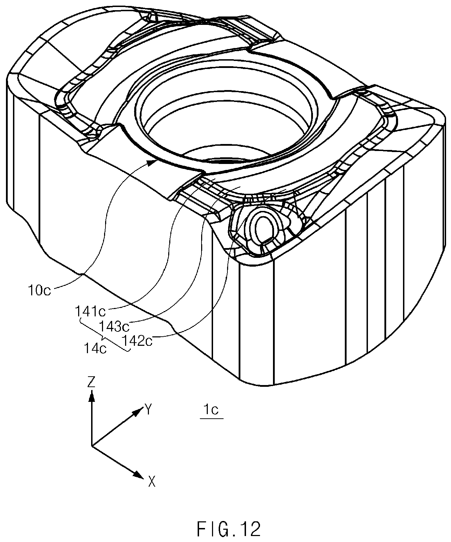

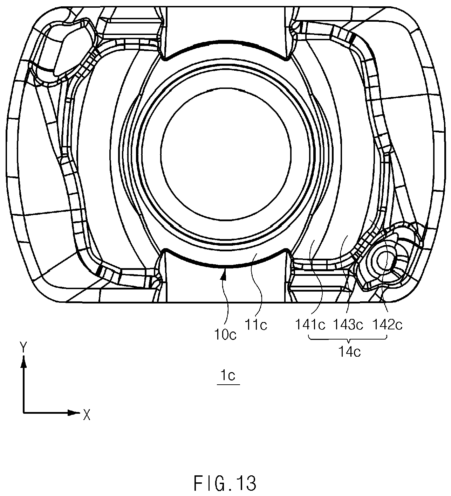

FIG. 12 is a perspective view illustrating a configuration of a cutting insert 1c according to a third embodiment of the present invention. FIG. 13 is a plan view of the cutting insert 1c according to the third embodiment of the present invention.

The cutting insert 1c according to the third embodiment of the present invention differs from the cutting insert 1 according to the first embodiment only in shape of a protrusion 14c, and thus, the difference in only the portions with will be further described, and the descriptions of the cutting insert 1 according to the first embodiment may be applied to the remaining portions.

The protrusion 14c of a top surface 10c of the cutting insert 1c according to the third embodiment of the present invention may include an inner convex surface 141c, an outer convex surface 142c, and a flat surface 143c disposed between the inner convex surface 141c and the outer convex surface 14c. Here, the outer convex surface 142c may not be continuous as in the second embodiment, but may be divided into a plurality of portions by an inclined surface 12c.

### Fourth embodiment

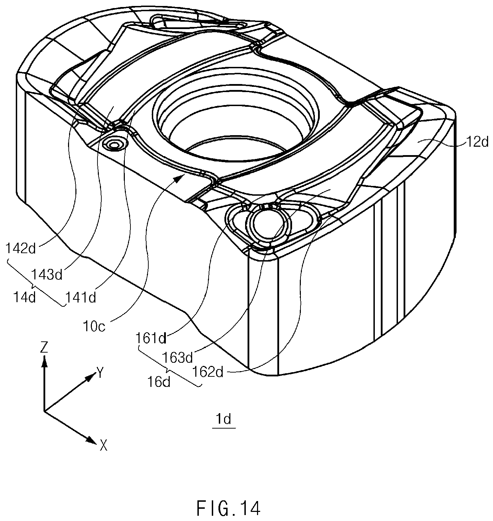

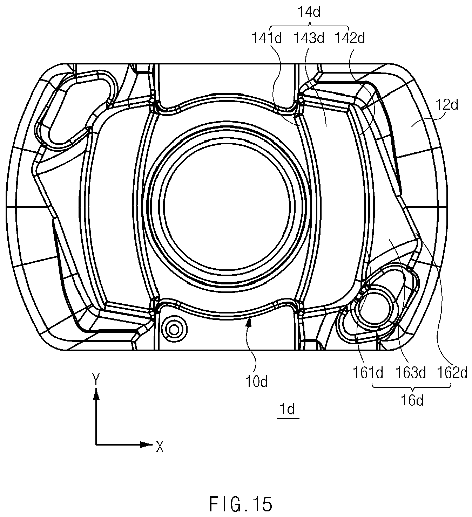

FIG. 14 is a perspective view illustrating a configuration of a cutting insert 1d according to a third embodiment of the present invention. FIG. 15 is a plan view of the cutting insert 1d according to the fourth embodiment of the present invention.

The cutting insert 1d according to the fourth embodiment of the present invention differs from the cutting insert 1 according to the first embodiment only in shape of a top surface 10d, and thus, the difference in only the portions with will be further described, and the descriptions of the cutting insert 1 according to the first embodiment may be applied to the remaining portions.

The protrusion 14d of a top surface 10d of the cutting insert 1d according to the fourth embodiment of the present invention may include an inner convex surface 141d, an outer convex surface 142d, and a flat surface 143d disposed between the inner convex surface 141d and the outer convex surface 142d. A length of the flat surface 143d in a longitudinal direction X may be greater than the sum of lengths of the inner convex surface 141d and the outer convex surface 142d. The protrusion 14d may further include front and rear convex surfaces provided at both ends of the flat surface 143d in a width direction Y, and thus, the convex surfaces may surround the flat surface 143d.

The top surface 10d of the cutting insert 1d according to the fourth embodiment of the present invention may include a connection part 16d between an inclined surface 12d and the protrusion 14d. The connection part 16d may include an inner connection surface 161d disposed at the inside in the longitudinal direction X and connected to the protrusion 14d, an outer connection surface 162d disposed at the outside and connected to the inclined surface 12d, and an intermediate connection surface 163d connecting the inner connection surface 161d to the outer connection surface 162d. The connection part 16d may have a triangular shape that protrudes outward in the longitudinal direction X when viewed in a plan view. The middle connection surface 163d may be disposed lower than the inclined surface 12d and the protrusion 14d in the vertical direction Z, and each of the inner connection surface 161d and the outer connection surface 162d may have an inclined shape in the vertical direction Z with respect to the longitudinal direction X to connect the intermediate connection surface 163d to the protrusion 14d and the inclined surface 12d respectively.

### Fifth embodiment

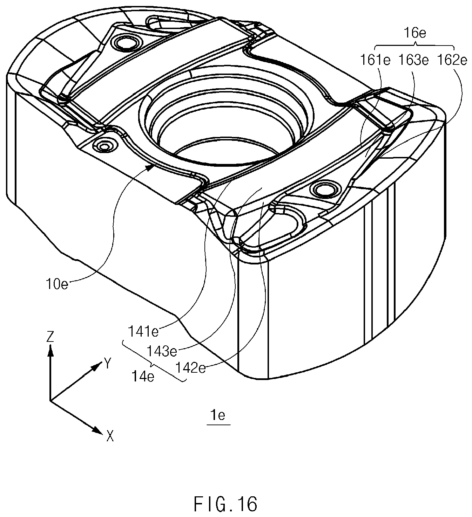

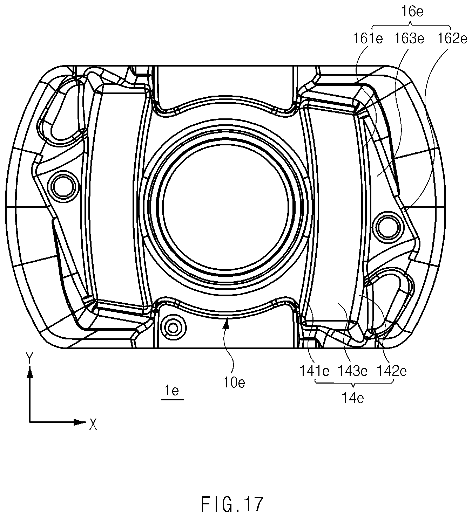

FIG. 16 is a perspective view illustrating a configuration of a cutting insert 1e according to a fifth embodiment of the present invention. FIG. 17 is a plan view of the cutting insert 1e according to the fifth embodiment of the present invention.

The cutting insert 1e according to the fifth embodiment of the present invention differs from the cutting insert 1 according to the first embodiment only in shape of a top surface 10e, and thus, the difference in only the portions with will be further described, and the descriptions of the cutting insert 1 according to the first embodiment may be applied to the remaining portions.

The protrusion 14e of a top surface 10e of the cutting insert 1d according to the fifth embodiment of the present invention may include an inner convex surface 141e, an outer convex surface 142e, and a flat surface 143e disposed between the inner convex surface 141e and the outer convex surface 142e. A length of the flat surface 143e in a longitudinal direction X may be greater than the sum of lengths of the inner convex surface 141e and the outer convex surface 142e. The protrusion 14e may further include front and rear convex surfaces provided at both ends of the flat surface 143e in a width direction Y, and thus, the convex surfaces may surround the flat surface 143e.

The protrusion 14d of the cutting insert 1d according to the fourth embodiment of the present invention may have a line-symmetrical structure with respect to a straight line extending along the width direction Y in the plan view. However, the protrusion 14e of the cutting insert 1e according to the fifth embodiment of the present invention may not have the line-symmetrical structure with respect to the straight line extending in the width direction Y in the plan view, but have a point-symmetrical structure using a point passing through a central axis of the above-described through-hole as a center. In the drawing, when compared to the protrusion 14d according to the fourth embodiment, the protrusion 14e according to the fifth embodiment is illustrated as having a portion extending further in the width direction Y.

The top surface 10e of the cutting insert 1e according to the fifth embodiment of the present invention may include a connection part 16e between an inclined surface 12e and the protrusion 14e. The connection part 16e may include an inner connection surface 161e disposed at the inside in the longitudinal direction X and connected to the protrusion 14e, an outer connection surface 162e disposed at the outside and connected to the inclined surface 12e, and an intermediate connection surface 163e connecting the inner connection surface 161e to the outer connection surface 162e. The connection part 16e may have a triangular shape that protrudes outward in the longitudinal direction X when viewed in a plan view. The middle connection surface 163e may be disposed lower than the inclined surface 12e and the protrusion 14e in the vertical direction Z, and each of the inner connection surface 161e and the outer connection surface 162e may have an inclined shape in the vertical direction Z with respect to the longitudinal direction X to connect the intermediate connection surface 163e to the protrusion 14e and the inclined surface 12e respectively.

### Sixth embodiment

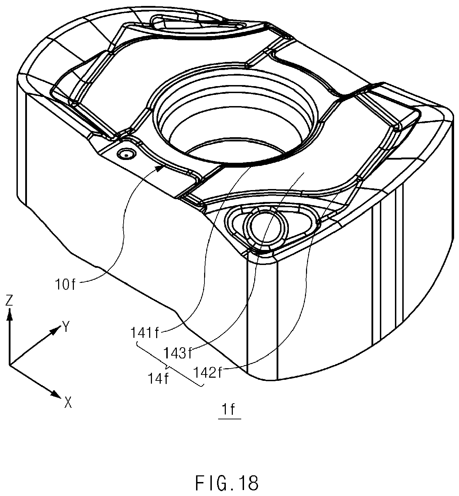

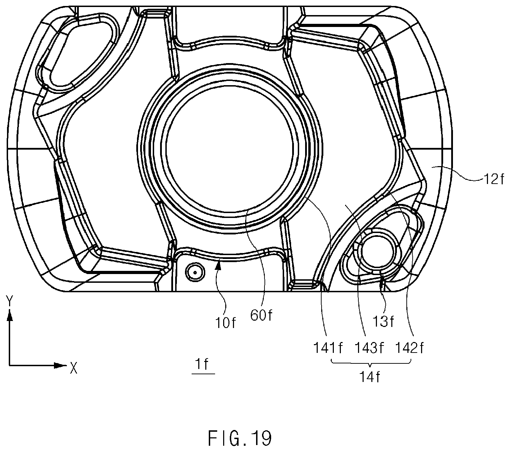

FIG. 18 is a perspective view illustrating a configuration of a cutting insert 1f according to a sixth embodiment of the present invention. FIG. 19 is a plan view of the cutting insert 1f according to the sixth embodiment of the present invention.

The cutting insert 1f according to the sixth embodiment of the present invention differs from the cutting insert 1 according to the first embodiment only in shape of a protrusion 14f, and thus, the difference in only the portions with will be further described, and the descriptions of the cutting insert 1 according to the first embodiment may be applied to the remaining portions.

The protrusion 14f of a top surface 10f of the cutting insert 1d according to the sixth embodiment of the present invention may include an inner convex surface 141f, an outer convex surface 142f, and a flat surface 143f disposed between the inner convex surface 141f and the outer convex surface 142f. A length of the flat surface 143f in a longitudinal direction X may be greater than the sum of lengths of the inner convex surface 141f and the outer convex surface 142f. As illustrated in the drawing, the flat surface 143f may be provided to occupy most of an area of the top surface 10f, and thus, the convex surfaces of the protrusion 14f may surround the flat surface 143f to define a boundary. The inner convex surface 141f may be provided adjacent to the through-hole 60f, and the outer convex surface 142f may be provided adjacent to the inclined surface 12f, the chip recess 13f, and the like.

All components may be coupled to one another to form a single body or to operate as a single body, but the present disclosure is not limited thereto. That is, one or more components are selectively coupled and operated within the scope of the present disclosure. The terms "comprising," "including," and "having," as used in the claims and specification herein, shall be considered as indicating an open group that may include other elements not specified. Unless terms used in the present disclosure are defined differently, the terms may be construed as meaning known to those skilled in the art. Terms such as terms that are generally used and have been in dictionaries should be construed as having meanings matched with contextual meanings in the art. In this description, unless defined clearly, terms are not ideally, excessively construed as formal meanings.

Therefore, the contact area between the cutting insert and the insert pocket may increase to improve the support force of the insert pocket to the cutting insert, thereby performing the stable processing.

The above-disclosed subject matter is to be considered illustrative, and not restrictive, and the appended claims are intended to cover all such modifications, enhancements, and other embodiments, which fall within the true spirit and scope of the present invention. Thus, the embodiment of the present invention is to be considered illustrative, and not restrictive, and the technical spirit of the present invention is not limited to the foregoing embodiment. Therefore, the scope of the present invention is defined not by the detailed description of the invention but by the appended claims, and all differences within the scope will be construed as being included in the present invention.

## Claims

1. A cutting insert comprising:
a top surface;
a bottom surface;
a pair of sub-side surfaces configured to connect ends of the top surface and the bottom surface in a width direction to each other;
a pair of main side surfaces configured to connect ends of the top surface and the bottom surface in a longitudinal direction to each other;
a plurality of corner side surfaces configured to connect the pair of sub-side surfaces to the pair of main side surfaces;
a through-hole configured to pass through central portions of the top surface and the bottom surface; and
a cutting part disposed on at least a portion of portions at which the top surface and the bottom surface intersect the pair of sub-side surfaces, the pair of main side surfaces, and the plurality of corner side surfaces,
wherein the top surface comprises a mounting surface in which the through-hole is defined and a pair of protrusions convexly protruding from the mounting surface.

2. The cutting insert of claim 1, wherein the pair of protrusions are disposed at both sides of the through-hole in the longitudinal direction, respectively.

3. The cutting insert of claim 1, wherein each of the pair of protrusions has a shape that is convex toward the outside in the longitudinal direction when viewed in a vertical direction.

4. The cutting insert of claim 1, wherein the top surface further comprises a pair of concave portions disposed below the mounting surface.

5. The cutting insert of claim 4, wherein, when viewed in a vertical direction, the pair of concave portions are disposed between the pair of protrusions in the longitudinal direction.

6. The cutting insert of claim 4, wherein each of the pair of concave portions has a shape that is inclined downward with respect to the outside in the width direction.

7. The cutting insert of claim 4, wherein each of the pair of concave portions has a shape that is concavely recessed downward.

8. The cutting insert of claim 4, wherein an inner boundary of each of the pair of concave portions in the width direction has a shape that is convex toward the outside.

9. The cutting insert of claim 4, wherein the pair of concave portions are disposed between the mounting surface and the pair of sub-side surfaces.

10. The cutting insert of claim 4, wherein a step between each of the concave portions and the mounting surface is formed.

11. The cutting insert of claim 1, wherein the pair of protrusions comprise:
an inner convex surface inclined upward toward the outside in the longitudinal direction;
an outer convex surface disposed outside the inner convex surface in the longitudinal direction and inclined upward toward the inside; and
a flat surface disposed between the inner convex surface and the outer convex surface.
